# EUROPÄISCHE PATENTSCHRIFT

(11) **EP 3 091 375 B1**
(45) Veröffentlichungstag und Bekanntmachung des Hinweises auf die Patenterteilung: **23.10.2019**
(21) Anmeldenummer: 16168246.3
(22) Anmeldetag: 04.05.2016
(51) Int. Cl.: G01W 1/16, G08B 21/10, H02G 13/00

(54) **BLITZWARNVORRICHTUNG**
LIGHTNING WARNING DEVICE
DISPOSITIF AVERTISSEUR DE FOUDRE

(30) Priorität: 08.05.2015 DE 202015003446 U
(43) Veröffentlichungstag der Anmeldung: 09.11.2016
(73) Patentinhaber: Coptr Warn- und Schutzsysteme GmbH, 50672 Köln (DE)
(72) Erfinder: Kominek, Philipp, 50858 Köln (DE); Schmitz, Andreas, 50933 Köln (DE)
(74) Vertreter: dompatent von Kreisler Selting Werner - Partnerschaft von Patent- und Rechtsanwälten mbB

(56) Entgegenhaltungen:
- DE-U1-202013 006 598
- US-A1- 2004 183 686
- US-B1- 7 358 855

## Beschreibung

Die Erfindung betrifft eine Blitzwarnvorrichtung zum Schutz von Personen vor Blitzschlag.

In den Sommermonaten Juni bis August entstehen durch die warme Luft vermehrt Gewitter. Allein in Deutschland können dabei mehr als 100.000 Blitze täglich erzeugt werden. Immer wieder kommen Personen durch Blitzschlag dabei zu schaden. Gerade in den Sommermonaten halten sich mehr Menschen im Freien auf, so dass das Gefährdungspotential weiter steigt. Insbesondere auf großen Freiluftflächen wie Golfplätzen, Flächen für Großveranstaltungen, Wander-/Skigebieten, aber auch auf Industrie- und Gewerbegroßflächen halten sich Menschen in exponierter Lage auf, so dass das Gefährdungspotential für einen Blitzschlag weiter steigt. Nicht nur wegen einer möglichen Haftung bei einem Schaden an einer Person durch einen Blitzschlag, sondern, insbesondere aus einem Sicherheitsgedanken heraus, sind Betreiber der Freiluftgroßflächen veranlasst für einen Blitzschutz Sorge zu tragen.

Üblicherweise dienen Schutzhütten als Blitzschutz. Dabei weisen die Schutzhütten einen Schutzraum auf, den Betroffene bei einem drohenden Gewitter aufsuchen können. Hier liegt es in der Verantwortung der Betroffenen das Gefährdungspotential durch einen Blitzschlag korrekt einzuschätzen und die vorhandene Schutzhütte aufzusuchen. Somit wird ein subjektives Moment in der Gefährdungsvermeidung durch die Einschätzung der Betroffenen eingeführt. Bei einer Fehleinschätzung der Betroffenen ist eine Schutzhütte nur ein unzureichender Schutz, da diese nicht aufgesucht werden.

Alternativ zu einem passiven Blitzschutz durch eine Schutzhütte existieren Blitzwarnsysteme, die vor einem herannahenden Gewitter warnen. Hier ist insbesondere das Blitzwarnsystem BLIDS ® der Firma Siemens zu nennen. Dieses Blitzwarnsystem verfügt über zahlreiche Messstationen, die deutschlandweit verteilt sind und zur Ermittlung und Detektion von Blitzen dienen. Die Detektion erfolgt dabei auf wenige Hundert Meter genau. Aus den detektierten Blitzen wird versucht, eine Vorhersage abzuschätzen. Bei einer möglichen Gefährdung durch einen Blitzschlag wird durch das Blitzwarnsystem eine Blitzwarnung versendet, die vom Betreiber der Freiluftgroßfläche, des Golfplatzes, des Wander-/Skigebiets oder der Industrie-/Gewerbegroßfläche empfangen wird. Die Blitzwarnung muss jedoch vom Betreiber interpretiert werden, sodann weitergeleitet bzw. verbreitet werden und ebenfalls gegenüber den Besuchern der Freiluftgroßflächen durchgesetzt werden. Auch hierdurch gelangt ein subjektives Element in den Ablauf der Gefährdungsvermeidung. So kann zwar der Betreiber eine entsprechende Blitzwarnung erhalten, wird diese aber falsch interpretiert, nicht an die betroffenen Personen weitergeleitet bzw. die betroffenen Personen nicht angeleitet, einen sicheren Ort aufzusuchen, so bleibt die Gefährdung für die Betroffenen durch einen Blitzschlag zu Schaden zu kommen aufgrund des Versagens oder der Fehlleistung des Betreibers weiterhin bestehen.

US 2004/0183686A1 beschreibt eine Anordnung, bei der auf Basis einer Messung der elektrostatischen Aufladung der Atmosphäre eine Wahrscheinlichkeit für einen Blitzeinschlag ermittelt wird und ein entsprechendes Warnsignal am Ort der Messung ausgegeben wird.

DE 20 2013 006 598 U1 beschreibt eine Blitzschutzeinrichtung mit einem Schutzraum und einem Empfänger zum Empfangen einer extern generierten Blitzwarnung, die am Ort des Empfängers wiedergegeben wird.

### US 7,358,855 B1 beschreibt ein Wetterwarnsystem.

Aufgabe der Erfindung ist es eine Blitzwarnvorrichtung zu schaffen, die den Blitzschutz verbessert und hierzu automatisch in Abhängigkeit des vorhandenen Gefährdungspotentials warnt.

Die Aufgabe wird erfindungsgemäß gelöst durch eine Blitzwarnvorrichtung nach Anspruch 1.

Die erfindungsgemäße Blitzwarnvorrichtung insbesondere zum Schutz von Personen vor Blitzschlag weist eine Stele auf. Mit Stele ist vorliegend eine langgestreckte Struktur gemeint, bei der es sich um einen Pfeiler, eine rotationssymmetrische Struktur (Zylinder, Boje) oder um einen flachen oder ebene Außenflächen aufweisenden Körper handeln kann. Mit der Stele ist eine Befestigungsvorrichtung verbunden zur Befestigung der Stele an einer ortsfesten Struktur. Durch die Befestigungsvorrichtung kann die Stele beispielsweise durch eine Schrauben-, Schienen-, Steckverbindung oder einer Kombination hieraus an der ortsfesten Struktur befestigt werden. Dies ermöglicht ein einfaches Anbringen der Stele an der ortsfesten Struktur und erlaubt somit auch insbesondere das nachträgliche Anbringen der Stele an einer bereits vorhandenen Struktur. Die Stele ist lösbar mit der ortsfesten Struktur verbunden, so dass die Stele und die gesamte Blitzwarnvorrichtung transportabel ausgebildet ist. Hierdurch wird eine einfach zu transportierende Blitzwarnvorrichtung geschaffen, welche an vielen Orten einsetzbar ist. Durch das lösbare Verbinden ist darüber hinaus die Blitzwarnvorrichtung, insbesondere die Stele, wartungsfreundlich, da keine aufwändige Arbeit erforderlich ist, um die Stele von der ortsfesten Struktur zu trennen und insbesondere zur Wartung die Stele bzw. Blitzwarnvorrichtung unabhängig von der ortsfesten Struktur transportiert werden kann. Insbesondere durch das lösbare Verbinden erweist sich die Warnvorrichtung als sehr variabel, so dass eine Vielzahl ortsfester Strukturen denkbar sind und die Warnvorrichtung bzw. Stele nur an solchen ortsfesten Strukturen angebracht wird, an denen sie tatsächlich benötigt wird. Hierdurch werden auch die Kosten für das Vorsehen einer Blitzwarnvorrichtung gesenkt.

Die erfindungsgemäße Blitzwarnvorrichtung weist einen Empfänger zum Empfangen einer Blitzwarnung auf. Mit dem Empfänger ist eine Steuerungseinrichtung verbunden. Darüber hinaus ist mit der Steuerungseinrichtung eine Warnvorrichtung verbunden. Durch die Warnvorrichtung wird ein Warnsignal abgegeben in Abhängigkeit von der empfangenen Blitzwarnung. Durch den Empfänger wird eine Blitzwarnung eines Blitzwarnsystems empfangen. Die empfangene Blitzwarnung wird weitergeleitet zu der mit dem Empfänger verbundenen Steuerungseinrichtung. Die Blitzwarnung wird in der Steuerungseinrichtung ausgewertet und sodann wird von der Steuerungseinrichtung in Abhängigkeit von dem in der Blitzwarnung angegebenen Gefährdungspotential die Warnvorrichtung angesteuert, so dass von der Warnvorrichtung ein Warnsignal abgegeben wird.

Durch die automatische Weiterleitung der Blitzwarnung durch die Steuerungseinrichtung an die Warnvorrichtung ist in der erfindungsgemäßen Blitzwarnvorrichtung kein subjektives Element mehr vorhanden. Liegt eine Blitzwarnung vor, wird automatisch ein Warnsignal generiert. Die betroffenen Personen werden durch die Abgabe des Warnsignals darauf aufmerksam gemacht, geeignete Schutzmaßnahmen zu treffen. Weder muss dabei die Blitzwarnung von dem Betreiber oder einem Mittelsmann interpretiert und weitergeleitet werden, noch bedarf es einer Auslegung des durch die Warnvorrichtung abgegebenen Warnsignals durch die betroffenen Personen. Hierdurch ist sichergestellt, dass bei einer vorliegenden Blitzwarnung und dem damit verbundenen Gefährdungspotential die gefährdeten Personen entsprechende Maßnahmen zu ihrem Schutz ergreifen können und insbesondere einen Schutzraum aufsuchen.

Erfindungsgemäß ist die Warnvorrichtung an der Stele angeordnet. Hierdurch erhält die Warnvorrichtung eine erhöhte Position, so dass durch die Stele eine verbesserte Sichtbarkeit der Warnvorrichtung auch über weite Distanzen möglich ist.

Vorzugsweise ist die Befestigungsvorrichtung an einem Ende der Stele angeordnet und die Warnvorrichtung an einem anderen Ende der Stele angeordnet, welches der Befestigungsvorrichtung gegenüberliegt. Hierdurch ist sichergestellt, dass die Warnvorrichtung möglichst hoch angeordnet ist, wodurch die Sichtbarkeit über eine möglichst weite Distanz hergestellt wird.

Insbesondere beinhaltet das Warnsignal eine Warnfarbe, kann alternativ oder ergänzend auch einen Warnton, die Wiedergabe von Sprache und/oder angezeigte Schrift aufweisen. Das Warnsignal kann auch aus einer Kombination hieraus bestehen. So kann z.B. bei der Wiedergabe von Sprache eine aufgenommene Warnung oder ein aufgenommener Satz, der Anweisungen zum Verhalten der Betroffenen Personen enthält, wiedergegeben werden. Alternativ oder zusätzlich hierzu kann die Warnung oder die Anweisung von der Warnvorrichtung lesbar als angezeigte Schrift dargestellt werden oder in Symbolen wie etwa Pfeilen, die die Richtung zum nächsten sicheren Ort weisen.

Insbesondere ist die Steuerungseinrichtung dazu ausgebildet aus mehreren jeweils unterschiedlichen Warnstufen zugeordneten Warnsignalen auszuwählen. Die Warnstufen entsprechen dabei unterschiedlichen Gefährdungspotentialen. Wird durch die Blitzwarnung ein gewisses Gefährdungspotential angegeben, so wird dieses durch die Steuerungseinrichtung einer entsprechenden Warnstufe zugeordnet. Die Steuerungseinrichtung wählt sodann aus einer Vielzahl unterschiedlicher Warnsignale das Warnsignal aus, welches der entsprechenden Warnstufe zugeordnet ist. Die Warnstufen können dabei bei einem heraufziehenden Gewitter dem Abstand des Gewitters zu der Blitzwarnvorrichtung entsprechen.

Alternativ oder zusätzlich hierzu können Warnstufen definiert werden über eine Blitzrate in einem vorgegebenen Radius um die Position einer Blitzwarnvorrichtung.

Bevorzugt sind drei Warnstufen vorgesehen: keine Warnung, mittlere Warnstufe und höchste Warnstufe. Die Warnsignale werden dabei entsprechend der vorliegenden Warnstufe ausgewählt. So kann z.B. die Lautstärke eines Warntons bei einer niedrigen Warnstufe entsprechend einem niedrigen Gefährdungspotential leise sein und zunehmen mit steigender Warnstufe. Es können jedoch auch in Abhängigkeit zu der vorliegenden Warnstufe ein unterschiedlicher Warnton und bevorzugt unterschiedliche Warntöne vorgesehen sein.

Insbesondere beinhalten die den jeweiligen unterschiedlichen Warnstufen zugeordneten Warnsignale jeweils verschiedene Warnfarben. Sind z.B. drei Warnstufen vorgesehen, so kann für die geringste Warnstufe die Warnfarbe Grün, für die mittlere Warnstufe die Warnfarbe Orange und für die höchste Warnstufe die Warnfarbe Rot vorgesehen sein. Jedoch können die Warnfarben jegliche andere Farbkombination enthalten. Auch ist die Anzahl der Warnstufen nicht auf drei beschränkt. So ist es auch möglich eine Vielzahl von Warnstufen vorzusehen, so dass der Übergang von der geringsten Warnstufe und der dieser Warnstufe zugeordneten Warnfarbe zu der höchsten Warnstufe und der dieser Warnstufe zugeordneten Warnfarbe für einen Betrachter kontinuierlich erscheint.

Bevorzugt weist die Warnvorrichtung zur Abgabe des Warnsignals LEDs, LED-Matten, OLEDs, Flächenstrahler und/oder LCD-Flächen auf. Hierdurch lassen sich insbesondere alle möglichen Warnfarben darstellen. Es ist jedoch auch möglich, durch die auf diese Weise weitergebildete Warnvorrichtung Schrift als Warnsignal anzuzeigen. Insbesondere ist die so weitergebildete Warnvorrichtung zumindest teilweise durch ein transluzentes Material überdeckt, so dass die Lichtpunkte, erzeugt durch einzelne LED, OLEDs oder LEDs der LED-Matten, für einen Betrachter nicht sichtbar sind, sondern für den Betrachter nur eine gesamtflächige Warnsignalabgabe sichtbar ist.

Insbesondere wird das Warnsignal ausgelöst bei Überschreiten einer Gefährdungsschwelle. Diese Gefährdungsschwelle kann insbesondere vom Betreiber der Blitzwarnvorrichtung vorgegeben werden und betrifft im Wesentlichen die Zuordnung des Gefährdungspotentials zu einer bestimmten Warnstufe. Bei der Gefährdungsschwelle kann es sich auch um einen Radius um den Ort der Blitzwarnvorrichtung handeln, der unterschritten wird.

Insbesondere ist mit dem Empfänger eine Antenne verbunden zum Empfangen der Blitzwarnung, wobei die Antenne vorzugsweise an der Stele angeordnet ist und besonderes bevorzugt in diese integriert ist. Hierdurch ist ein kompaktes Design der Stele möglich, was den Aufbau der Blitzwarnvorrichtung vereinfacht.

Insbesondere weist die Blitzwarnvorrichtung einen Blitzableiter auf gegen Beschädigung durch Blitzschlag. Der Blitzableiter ist dabei vorzugsweise in die Stele integriert, wodurch ein kompaktes Design der Blitzwarnvorrichtung gewährleistet ist, was den Aufbau weiter vereinfacht.

Insbesondere empfängt der Empfänger die Blitzwarnung drahtlos. Dabei kann vorzugsweise die Übertragung per Funk, Bluetooth, WiFi, GSM, 3G, 4G oder LTE erfolgen. Jedoch ist es auch möglich, dass der Empfänger die Blitzwarnung über eine andere oder eine neuere Übertragungstechnik drahtlos empfängt. Somit ist es möglich, dass der Empfänger mit dem Internet verbunden ist und die Blitzwarnung aus dem Internet bezieht. Alternativ hierzu ist es auch möglich, dass der Empfänger die Blitzwarnung als Kurzmitteilung (Short Message Service) über GSM empfängt und die Kurzmittleitung von der Steuerungseinrichtung ausgewertet wird.

Insbesondere handelt es sich bei der ortsfesten Struktur um eine Blitzschutzhütte, eine Schutzhütte im Allgemeinen, wie beispielsweise eine Berghütte, ein Schutzhaus, eine Unterstandshütte, ein Wetterschutzhaus oder ähnliches. Alternativ hierzu kann es sich bei der ortsfesten Struktur auch um ein Haus bzw. Gebäude handeln. Alternativ hierzu ist es auch denkbar, als ortsfeste Struktur eine Bushaltestelle oder einer Strandhütte oder einen Strandwarnmast zu verwenden. Weiterhin kann es sich bei der ortsfesten Struktur um ein natürliches Objekt, wie zum Beispiel einen Felsen, handeln. Sobald die Warnvorrichtung an der ortsfesten Struktur befestigt ist, wird durch die Anzeige des Warnsignals durch die Warnvorrichtung gleichzeitig der Ort bzw. der Blitzschutzhütte weithin sichtbar angezeigt. Die betroffenen Personen können beim Anbringen der Warnvorrichtung an einem geschützten Gebäude zwei Informationen erhalten. Erstens werden sie über die Warnstufe informiert, zweitens werden sie informiert über die Position beispielsweise der Blitzschutzhütte, der Schutzhütte des Gebäudes oder dergleichen. Alternativ kann eine zusätzliche Information übermittelt werden mit der Aufforderung, einen geschützten Bereich aufzusuchen, beziehungsweise wo sich der nächste sichere Bereich befindet. Vorzugsweise ist die Steuerungsrichtung innerhalb der Stele oder der Befestigungsvorrichtung angeordnet. Hierdurch wird ein besonderes kompaktes Design der Blitzwarnvorrichtung erreicht, so dass diese im Wesentlichen als ein Bauteil ausgebildet ist und auf einfache Art an der ortsfesten Struktur angebracht werden kann. Verbindungen zwischen der Stele und der Steuerungsvorrichtung verlaufen innerhalb der Stele oder der Befestigungsvorrichtung und müssen bei der Anbringung der Blitzwarnvorrichtung nicht berücksichtigt bzw. gesondert vorgesehen werden.

Vorzugsweise weist die Blitzwarnvorrichtung eine autarke Energieversorgung auf. Diese kann beispielsweise durch ein Solarmodul vorgesehen sein. Alternativ oder zusätzlich hierzu kann die Blitzwarnvorrichtung einen Akkumulator aufweisen, der beispielsweise im Vorhinein geladen werden kann oder durch das Solarmodul geladen wird. Alternativ oder zusätzlich zu einem Solarmodul ist beispielsweise auch ein Windrad oder dergleichen denkbar.

Alternativ oder zusätzlich hierzu weist die Blitzwarnvorrichtung vorzugsweise eine Batterie auf, durch die die autarke Energieversorgung gewährleistet werden kann. Durch die autarke Energieversorgung wir beispielsweise sichergestellt, dass es sich bei der Blitzwarnvorrichtung um eine unabhängige Vorrichtung handelt, so dass eine Stromversorgung bei Anbringung der Blitzwarnvorrichtung nicht gesondert vorgesehen werden muss. Dies ist insbesondere vorteilhaft, falls die Blitzwarnvorrichtung an schwer zugänglichen Orten oder über eine große Fläche verteilt vorgesehen wird. Insbesondere ist es hierbei bevorzugt, dass sich wie oben beschrieben die Steuerungsvorrichtung innerhalb der Stele oder der Befestigungsvorrichtung befindet. Hierdurch wird eine Blitzwarnvorrichtung geschaffen, welche als ein einzelnes unabhängiges Bauteil ausgebildet ist und lediglich für ein Funktionieren an der ortsfesten Struktur an der ortsfesten Struktur angebracht werden muss.

Insbesondere besteht die Stele aus Aluminium, Kunststoff oder einem Kohlefaserverbundstoff, so dass die Stele ein geringes Gewicht aufweist. Hierdurch wird beispielsweise sichergestellt, dass keine aufwendigen Tragstrukturen für die Stele erforderlich sind, so dass die Blitzwarnvorrichtung auch nachträglich an bereits vorhandenen ortsfesten Strukturen angebracht werden kann, welche nicht besonders ausgelegt sein müssen, um ein erhöhte Tragfähigkeit zu gewährleisten.

Nachfolgend wird die Erfindung anhand bevorzugter Ausführungsformen mit Bezug auf die anliegenden Zeichnungen näher erläutert.

Es zeigen:
- Fig. 1: eine erfindungsgemäße Blitzwarnvorrichtung,
- Fig. 2: eine weitere alternative Ausführungsform der erfindungsgemäßen Blitzwarnvorrichtung und
- Fig. 3: eine weitere alternative Ausführungsform der erfindungsgemäßen Blitzwarnvorrichtung.

Die erfindungsgemäße Blitzwarnvorrichtung weist eine Stele 10 auf, welche an einem Ende eine Warnvorrichtung 12 und am anderen Ende eine Befestigungsvorrichtung 14 aufweist.

Durch die Warnvorrichtung 12 lässt sich ein Warnsignal, das eine Warnfarbe beinhaltet, abgeben. Die Warnvorrichtung 12 ist hierzu verbunden mit einer Steuerungseinrichtung 16 und die Steuerungseinrichtung 16 ist wiederum verbunden mit einem Empfänger 18. Der Empfänger 18 empfängt über eine Antenne 20 drahtlos eine Blitzwarnung eines Blitzwarnsystems 22. Das Blitzwarnsystem 22 weist eine Vielzahl von Detektoren 24 auf, die weiträumig über ein Gebiet verteilt sind. Durch die Detektoren 24 werden Blitze detektiert. Auf Grundlage des Ortes des detektierten Blitzes und dem Verlauf, wird durch das Blitzwarnsystem 22 eine Prognose auf Basis einer Abschätzung von Wahrscheinlichkeiten erstellt, für den Ort der erfindungsgemäßen Blitzwarnvorrichtung. Über eine Antenne 26 wird eine Blitzwarnung ausgegeben, falls sich am Ort der Blitzwarnvorrichtung die Warnstufe und somit auch das Gefährdungspotential ändern. Das Blitzwarnsystem 22 kann eine Prognose über das Gefährdungspotential auch aus anderen Wetterdaten, wie zum Beispiel Windrichtung, Windstärke, Luftdruck und/oder Niederschlag ermitteln.

Die vom Blitzwarnsystem 22 ausgegebene Blitzwarnung wird vom Empfänger 18 über die Antenne 20 empfangen, gelangt so zur Steuerungseinrichtung 16 und wird dort ausgewertet. Von der Steuerungseinrichtung 16 wird in Abhängigkeit einer vorliegenden Warnstufe ein der jeweiligen Warnstufe zugeordnetes Warnsignal ausgewählt. Dieses ausgewählte Warnsignal wird über die Warnvorrichtung 12 abgegeben. Im vorliegenden Ausführungsbeispiel beinhaltet das Warnsignal eine Warnfarbe, so dass bei einer vorliegenden Warnstufe eine entsprechende Warnfarbe von der Steuerungseinrichtung 16 ausgewählt wird. So wird bspw. bei Vorliegen einer niedrigen Warnstufe von der Steuerungseinrichtung 16 die Farbe Grün ausgewählt und durch die Warnvorrichtung 12 die grüne Farbe dargestellt. Steigt die Warnstufe, verändert sich die Warnfarbe, so dass bei einer anderen Warnstufe von der Steuerungseinrichtung 16 die Farbe Orange ausgewählt wird und diese Farbe von der Warnvorrichtung 12 dargestellt wird. Bei der höchsten Warnstufe wird durch die Steuerungsvorrichtung 16 bspw. die Farbe Rot auswählt und wiederum wird die Farbe Rot durch die Warnvorrichtung 12 dargestellt. Bei den genannten Farben handelt es sich jedoch nur um Beispiele, so dass jede andere Farbe, die durch die Warnvorrichtung 12 dargestellt werden kann, ebenfalls einer Warnstufe zugeordnet werden kann.

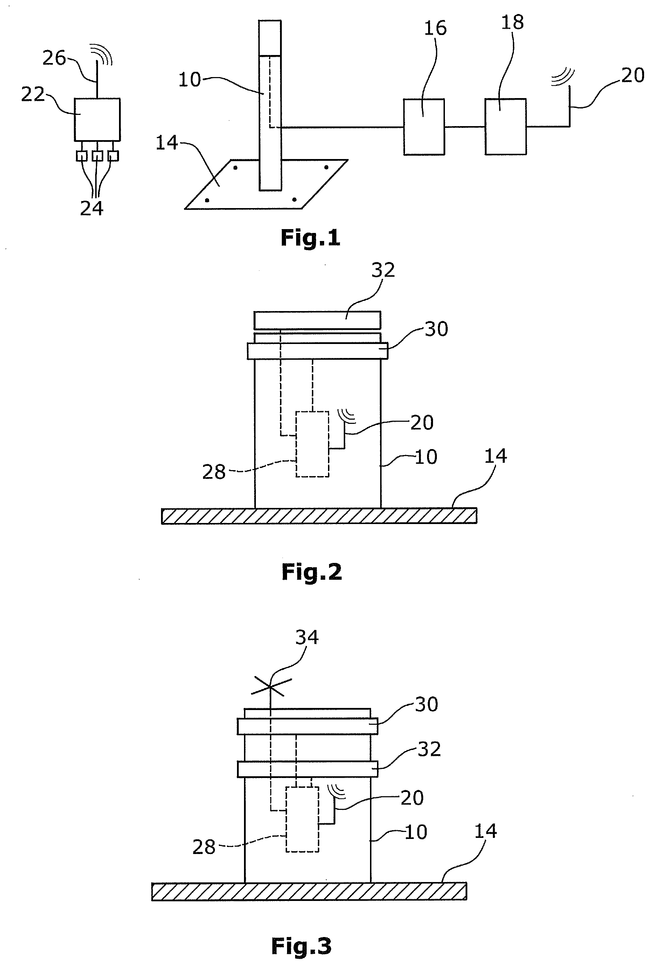

Fig. 2 zeigt eine alternative Ausführungsform der erfindungsgemäßen Blitzwarnvorrichtung. In der Darstellung der Fig. 2 wurde auf das Blitzwarnsystem 22 verzichtet. Gleichwohl enthält die Blitzwarnvorrichtung der Fig. 2 eine Antenne 20, welche die Blitzwarnung eines Blitzwarnsystems 22 empfängt. Hierbei ist die Antenne 20 in die Stele 10 integriert. Weiter ist eine Steuerungsvorrichtung 28 vorgesehen, welche als integrierten Bestandteil den Empfänger bereits aufweist. Dabei ist auch die Steuerungsvorrichtung 28 in die Stele 10 integriert, so dass keine externe Komponente für die Steuerungseinrichtung 28 vorgesehen sein muss. Mit der Steuerungsvorrichtung 28 ist eine Warnvorrichtung 30 verbunden. Diese erstreckt sich über einen möglichst großen Bereich der Stele, um ein deutliches Warnsignal abgeben zu können. Durch die vergrößerte Warnvorrichtung ist die Blitzwarnvorrichtung klar und eindeutig auch aus einer großen Entfernung zu sehen. Auch weit entfernt befindliche Personen erhalten Informationen über die aktuelle Warnstufe. Die Warnvorrichtung 30 wird beispielsweise durch LEDs bzw. LED-Matten und/oder LED-Flächen gebildet, so dass durch die Warnvorrichtung 30 Informationen an den Betrachter in Form von Farben, Textbotschaften und/oder Symbolen weithin sichtbar abgegeben werden können.

Darüber hinaus ist die Steuerungsvorrichtung 28 mit einem Solarmodul 32 verbunden, durch welche die Stromversorgung der Blitzwarnvorrichtung sichergestellt wird. Das Solarmodul 32 ist dabei am oberen Ende der Stele gegenüber der Befestigungsvorrichtung 14 angeordnet.

Fig. 3 zeigt eine weitere alternative Ausführungsform der erfindungsgemäßen Blitzwarnvorrichtung, wobei gleiche oder identische Bauteile mit denselben Bezugsnummern gekennzeichnet sind. Wieder wurde auf die Darsteillung des Blitzwarnsystems 22 verzichtet. Alternativ zu dem Solarmodul 32 weist die Ausführungsform der Fig. 3 ein Windrad 34 auf, über welches die Steuerungsvorrichtung 28 mit Strom versorgt wird. Auch hierdurch wird sichergestellt, dass die erfindungsgemäße Blitzwarnvorrichtung autark und damit auch an unzugänglichen Orten oder über eine große Fläche verteilt angeordnet werden kann. Durch die integrierte Bauweise handelt es sich auch bei der Ausführungsform der Fig. 3 um eine autarke, integrierte und kompakte Einheit, welche keinerlei kabelgebundene Verbindungen nach außen erfordert. Darüber hinaus weist die Blitzwarnvorrichtung der Fig. 3 eine weitere Warnvorrichtung 32 auf, durch welche ein Warnton abgegeben werden kann, wobei der Warnton insbesondere auch angepasst werden kann an die vorliegende Warnstufe.

## Patentansprüche

1. Kombination aus einem Blitzwarnsystem (22) und einer Blitzwarnvorrichtung, insbesondere zum Schutz von Personen vor Blitzschlag,
wobei die Blitzwarnvorrichtung aufweist:
eine Stele (10),
eine an der Stele (10) angeordnete Warnvorrichtung (12, 30, 32) zur Abgabe eines Warnsignals,
eine mit der Stele (10) verbundene Befestigungsvorrichtung (14) zur lösbaren Befestigung der Stele an einer ortsfesten Struktur,
einen Empfänger (18) zum Empfangen einer Blitzwarnung, die ein Gefährdungspotential für den Ort der Blitzwarnvorrichtung enthält und die von dem Blitzwarnsystem (22) übermittelt wird, und
eine mit dem Empfänger (18) kommunizierende Steuerungseinrichtung (16, 28),
wobei die Warnvorrichtung (12, 30, 32) mit der Steuerungseinrichtung (16, 28) verbunden ist, um das Warnsignal in Abhängigkeit von der empfangenen Blitzwarnung auszugeben,
und wobei das Blitzwarnsystem (22) über ein Gebiet verteilte Blitzdetektoren (24) aufweist und dazu ausgebildet ist, eine Prognose für das Gefährdungspotential für einen Blitzeinschlag am Ort der Blitzwarnvorrichtung auf Grundlage des Ortes eines detektierten Blitzes und des Verlaufs durch Abschätzung zu erstellen.

2. Kombination nach Anspruch 1, **dadurch gekennzeichnet, dass** die Befestigungsvorrichtung (14) an einem Ende der Stele (10) angeordnet ist und die Warnvorrichtung (12, 30, 32) an einem anderen Ende der Stele (10) angeordnet ist.

3. Kombination nach Anspruch 1 oder 2, **dadurch gekennzeichnet, dass** das Warnsignal eine Warnfarbe, einen Warnton, Wiedergabe von Sprache und/oder angezeigte Schrift beinhaltet.

4. Kombination nach einem der Ansprüche 1 bis 3, **dadurch gekennzeichnet, dass** die Steuerungseinrichtung (16, 28) dazu ausgebildet ist, aus mehreren, jeweils unterschiedlichen Warnstufen zugeordneten Warnsignalen auszuwählen.

5. Kombination nach Anspruch 4, **dadurch gekennzeichnet, dass** die den jeweiligen Warnstufen zugeordneten Warnsignale jeweils verschiedene Warnfarben und/oder Warnlautstärken beinhalten.

6. Kombination nach einem der Ansprüche 1 bis 5, **dadurch gekennzeichnet, dass** das Warnsignal ausgelöst wird bei Überschreiten einer Gefährdungsschwelle.

7. Kombination nach einem der Ansprüche 1 bis 6, **gekennzeichnet durch** eine mit dem Empfänger (18) verbundene Antenne (20) zum Empfangen der Blitzwarnung, wobei die Antenne (20) insbesondere an der Stele (10) angeordnet ist.

8. Kombination nach einem der Ansprüche 1 bis 7, **gekennzeichnet durch** einen an der Stele (10) angeordneten Blitzableiter zum Schutz der Blitzwarnvorrichtung.

9. Kombination nach einem der Ansprüche 1 bis 7, **dadurch gekennzeichnet, dass** der Empfänger (18) die Blitzwarnung drahtlos, insbesondere über Funk, Bluetooth, WiFi, GSM, 3G, 4G, LTE oder eine neuere Übertragungsgeneration empfängt.

10. Kombination nach einem der Ansprüche 1 bis 8, **dadurch gekennzeichnet, dass** es sich bei der ortsfesten Struktur um eine Blitzschutzhütte, eine Berghütte, ein Haus, eine Bushaltestelle oder einen Strandwarnmast handelt.

11. Kombination nach einem der Ansprüche 1 bis 9, **dadurch gekennzeichnet, dass** die Steuerungsvorrichtung (16, 28) innerhalb der Stele (10) oder der Befestigungsvorrichtung (14) angeordnet ist.

12. Kombination nach einem der Ansprüche 1 bis 10, **gekennzeichnet durch** eine autarke Energieversorgung insbesondere durch ein Solarmodul (32), eine Batterie, einen Akkumulator und/oder dergleichen.

13. Verfahren zum Warnen von Personen vor Blitzschlag mit einer Blitzwarnvorrichtung nach einem der vorhergehenden Ansprüche, **gekennzeichnet durch** die Schritte:
Detektieren von Blitzen mit weiträumig über ein Gebiet verteilten Detektoren (24) eines Blitzwarnsystems (22),
Erstellen einer Prognose für das Gefährdungspotential für einen Blitzschlag am Ort der Blitzwarnvorrichtung durch das Blitzwarnsystem (22) auf Grundlage des Ortes eines detektierten Blitzes und des Verlaufs durch Abschätzung, Erzeugen einer Blitzwarnung, die das Gefährdungspotential für den Ort der Blitzwarnvorrichtung enthält durch das Blitzwarnsystem (22) und Senden der Blitzwarnung an den Empfänger (18) der Blitzwarnvorrichtung, Auswerten der empfangenen Blitzwarnung durch die Steuerungseinrichtung (16) und
Ausgeben eines Warnsignals über die Warnvorrichtung (12, 30, 32) in Abhängigkeit von der empfangenen Blitzwarnung.

## Claims

1. A combination of a lightning warning system (22) and a lightning warning device, particularly for protecting people from lightning strike, the lightning warning device comprising:
a stele (10),
a warning device (12, 30, 32) arranged at the stele (10) for emitting a warning signal,
a mounting device (14) connected to the stele (10) for detachably mounting the stele on a stationary structure,
a receiver (18) for receiving a lightning warning which includes a hazard potential for the location of the lightning warning device, and which is transmitted by the lightning warning system (22), and
a control device (16, 28) communicating with the receiver (18),
wherein the warning device (12, 30, 32) is connected to the control device (16, 28) to emit the warning signal depending on the received lightning warning,
and wherein the lightning warning system (22) comprises lightning detectors (24), which are distributed across a region, and is adapted to make a prediction for the hazard potential for a lightning strike at the location of the lightning warning device on the basis of the location of a detected lightning and of the course by estimation.

2. The combination according to claim 1, **characterized in that** the mounting device (14) is arranged at one end of the stele (10), and the warning device (12, 30, 32) is arranged at another end of the stele (10).

3. The combination according to claim 1 or 2, **characterized in that** the warning signal includes a warning color, a warning tone, reproduction of speech and/or displayed writing.

4. The combination according to any one of claims 1 to 3, **characterized in that** the control device (16, 28) is adapted to select from several warning signals, each assigned to different warning levels.

5. The combination according to claim 4, **characterized in that** the warning signals assigned to the respective warning levels each include different warning colors and/or warning volumes.

6. The combination according to any one of claims 1 to 5, **characterized in that** the warning signal is triggered when a hazard threshold is exceeded.

7. The combination according to any one of claims 1 to 6, **characterized by** an antenna (20) connected to the receiver (18) for receiving the lightning warning, wherein the antenna (20) is particularly arranged at the stele (10).

8. The combination according to any one of claims 1 to 7, **characterized by** a lightning conductor arranged at the stele (10) for protecting the lightning warning device.

9. The combination according to any one of claims 1 to 7, **characterized in that** the receiver (18) receives the lightning warning wirelessly, particularly via radio, Bluetooth, WiFi, GSM, 3G, 4G, LTE or a more recent transmission generation.

10. The combination according to any one of claims 1 to 8, **characterized in that** the stationary structure is a lightning protection shelter, a mountain shelter, a house, a bus stop or a beach warning pole.

11. The combination according to any one of claims 1 to 9, **characterized in that** the control device (16, 28) is arranged within the stele (10) or the mounting device (14).

12. The combination according to any one of claims 1 to 10, **characterized by** a self-sufficient energy supply, particularly by a solar module (32), a battery, an accumulator and/or the like.

13. A method for warning a person of a lightning strike with a lightning warning device according to any one of the preceding claims, **characterized by** the steps:
detecting lightnings with detectors (24) of a lightning warning system (22) which are widely distributed across a region,
making a prediction for the hazard potential for a lightning strike at the location of the lightning warning device by means of the lightning warning system (22) on the basis of the location of a detected lightning and of the course by estimation,
generating a lightning warning, which includes the hazard potential for the location of the lightning warning device, by means of the lightning warning system (22), and sending the lightning warning to the receiver (18) of the lightning warning device,
evaluating the received lightning warning by means of the control device (16), and
emitting a warning signal via the warning device (12, 30, 32) depending on the received lightning warning.

## Revendications

1. Combinaison d'un système d'alerte à la foudre (22) et d'un dispositif d'alerte à la foudre, en particulier pour la protection des personnes contre la foudre, dans laquelle le dispositif d'alerte à la foudre comporte :
une stèle (10),
un dispositif d'alerte (12, 30, 32) agencé sur la stèle (10) pour émettre un signal d'alerte,
un dispositif de fixation (14) relié à la stèle (10) pour fixation amovible de la stèle à une structure stationnaire,
un récepteur (18) pour la réception d'une alarme foudre, laquelle contient un potentiel de risque pour le lieu du dispositif d'alerte à la foudre et est transmise depuis le système d'alerte à la foudre (22), et
un moyen de commande (16, 28) communiquant avec le récepteur (18),
dans laquelle le dispositif d'alerte (12, 30, 32) est relié au moyen de commande (16, 28), afin d'émettre le signal d'alerte en fonction de l'alarme foudre reçue,
et dans laquelle le système d'alerte à la foudre (22) comporte des détecteurs de foudre (24) distribués sur une zone et est réalisé de façon à établir un pronostic pour le potentiel de risque pour une chute de foudre à l'endroit du dispositif d'alerte à la foudre en se basant sur l'endroit d'un éclair détecté et l'évolution par estimation.

2. Combinaison selon la revendication 1, **caractérisée en ce que** le dispositif de fixation (14) est agencé à une extrémité de la stèle (10) et le dispositif d'alerte (12, 30, 32) est agencé à une autre extrémité de la stèle (10) .

3. Combinaison selon la revendication 1 ou 2, **caractérisée en ce que** le signal d'alerte contient une couleur d'alerte, un son d'alerte, une restitution de voix et/ou d'écriture affichée.

4. Combinaison selon l'une des revendications 1 à 3, **caractérisée en ce que** le moyen de commande (16, 28) est réalisé de façon à sélectionner parmi plusieurs signaux d'alerte assignés à différents niveaux d'alerte respectifs.

5. Combinaison selon la revendication 4, **caractérisée en ce que** les signaux d'alerte assignés aux niveaux d'alerte respectifs contiennent respectivement différentes couleurs d'alerte et/ou différents volumes sonores d'alerte.

6. Combinaison selon l'une des revendications 1 à 5, **caractérisée en ce que** le signal d'alerte est déclenché lors du dépassement d'un seuil de risque.

7. Combinaison selon l'une des revendications 1 à 6, **caractérisée par** une antenne (20) reliée au récepteur (18) pour recevoir l'alerte à la foudre, dans laquelle l'antenne (20) est en particulier agencée à la stèle (10) .

8. Combinaison selon l'une des revendications 1 à 7, **caractérisée par** un paratonnerre agencé à la stèle (10) pour protéger le dispositif d'alerte à la foudre.

9. Combinaison selon l'une des revendications 1 à 7, **caractérisée en ce que** le récepteur (18) reçoit l'alerte à la foudre sans fil, en particulier par radio, Bluetooth, WiFi, GSM, 3G, 4G, LTE ou une nouvelle génération de télécommunications.

10. Combinaison selon l'une des revendications 1 à 8, **caractérisée en ce qu'**on entend par structure stationnaire un refuge contre la foudre, un refuge de montagne, une maison, un arrêt de bus ou un mât de signalisation de plage.

11. Combinaison selon l'une des revendications 1 à 9, **caractérisée en ce que** le moyen de commande (16, 28) est agencé à l'intérieur de la stèle (10) ou du dispositif de fixation (14).

12. Combinaison selon l'une des revendications 1 à 10, **caractérisée par** une alimentation autonome en énergie, en particulier par un module solaire (32), une batterie, un accumulateur et/ou similaire.

13. Procédé d'avertissement de personnes avant une chute de foudre avec un dispositif d'alerte selon l'une des revendications précédentes, **caractérisé par** les étapes :
détection d'éclairs avec des détecteurs (24) d'un système d'alerte à la foudre (22) distribués spatialement sur une zone,
établissement d'un pronostic pour le potentiel de risque d'une chute de foudre sur le lieu du dispositif d'alerte à la foudre par le système d'alerte à la foudre (22) en se basant sur l'endroit d'un éclair détecté et l'évolution par estimation,
création d'une alerte à la foudre par le système d'alerte à la foudre (22), contenant le potentiel de risque pour le lieu du dispositif d'alerte à la foudre, et envoi de l'alerte à la foudre au récepteur (18) du dispositif d'alerte à la foudre,
évaluation de l'alerte à la foudre reçue par le moyen de commande (16) et
émission d'un signal d'alerte par le dispositif d'alerte (12, 30, 32) en fonction de l'alerte à la foudre reçue.
